(19) Europäisches Patentamt
European Patent Office
Office européen des brevets

(11) Veröffentlichungsnummer: **0 533 024 A2**

(12) # EUROPÄISCHE PATENTANMELDUNG

(21) Anmeldenummer: **92115314.4**

(51) Int. Cl.$^5$: **B01J 2/28**

(22) Anmeldetag: **08.09.92**

(30) Priorität: **20.09.91 DE 4131345**

(43) Veröffentlichungstag der Anmeldung: **24.03.93 Patentblatt 93/12**

(84) Benannte Vertragsstaaten: **AT BE CH DE DK ES FR GB IT LI**

(71) Anmelder: **BAYER AG**

**W-5090 Leverkusen 1 Bayerwerk(DE)**

(72) Erfinder: **Mazanek, Jan, Dr.**
**Haferkamp 2**
**W-5000 Köln 80(DE)**
Erfinder: **von Gizycki, Ulrich, Dr.**
**Wiembachallee 24**
**W-5090 Leverkusen 3(DE)**
Erfinder: **Müller, Hanns-Peter, Dr.**
**Hollweg 20**
**W-5068 Odenthal(DE)**
Erfinder: **Kalbe, Jochen, Dr.**
**Prälatenweg 30**
**W-4300 Essen 18(DE)**
Erfinder: **Uhlemann, Hans, Dr.**
**Fontanestrasse 56**
**W-5650 Solingen(DE)**

(54) **Granulate aus pulvrigen Primärpartikeln mit verbesserten Verarbeitungseigenschaften.**

(57) Granulate aus pulverförmigen Primärpartikeln mit vorteilhaften Eigenschaften enthalten Polyurethane und/oder Polyharnstoffe, Polyether und gegebenenfalls weitere Polymere.

EP 0 533 024 A2

Die vorliegende Erfindung betrifft Granulate aus pulverförmigen Materialien, die verbesserte Verarbeitungseigenschaften, insbesondere bezüglich Verpreßbarkeit, Rückdehnungsverhalten, Staubfreiheit und/oder Redispergierbarkeit aufweisen.

Bei der Handhabung und Verarbeitung von Füllstoffen, Pigmenten, keramischen Pulvern, Kohle, Metallpulvern und anderen partikelförmigen Materialien entstehen insbesondere dann Probleme, wenn die Partikel ganz oder teilweise Durchmesser von weniger als 10 µm besitzen. Die Stäube aus solchen Partikeln können in Bezug auf Sicherheit, Gesundheit und Umweltschutz besondere Maßnahmen erfordern. Bei der Weiterverarbeitung solcher partikelförmigen Materialien zu gepreßten Artikeln, beispielsweise zu Pellets oder zu Grünkörpern aus keramischen Pulvern treten dann eine ungenügende Verpreßbarkeit der Pulver und schlechte mechanische Eigenschaften bei den Preßlingen auf.

Zur Verbesserung der Handhabung und der Verarbeitungseigenschaften von feinpulvrigen Materialien kann man diese Materialien unter Zusatz von anorganischen und/oder organischen Stoffen granulieren. Diese Granulate lassen sich besser verarbeiten. Beispiele für solche Zusätze sind Polyvinylalkohol, Cellulosederivate, Gelatine, Polyacrylamide, Polyether, Wasserglas, Sulfitablaugen, Phenolformaldehydharze, Melaminharze, Vinylpolymere, Dienpolymere, Vinylcopolymere, Diencopolymere, Tenside, Öl und/oder Teer (siehe beispielsweise DE-A 2 706 659, DD-A 242 606, DE-A 2 328 841, DE-A 3 505 028, DD-A 159 324 und DD-A 137 835).

Wenn die Granulate durch Verpressen oder in Spritzgußverfahren zu Formkörpern verarbeitet werden sollen, z.B. beim Trockenpressen von Keramik oder beim Spritzguß von Keramikpulvern, werden besondere Anforderungen an die Zusatzstoffe gestellt, da sie nicht nur eine gute Verarbeitbarkeit der Granulate gewährleisten müssen, sondern auch die weiteren Verfahrensschritte der Keramikherstellung nicht negativ beeinflussen dürfen. Sie müssen sich z.B. rückstandslos und ohne Beschädigung des Formlings ausbrennen lassen und die Herstellung von homogenen, möglichst porenfreien Endprodukten ermöglichen. Weitere Anforderungen an solche Granulate sind gute Grünfestigkeit des Formlings, gute Entformbarkeit und insbesondere eine nur geringe, vorzugsweise keine Rückdehnung des Preßlings nach der Druckentlastung.

Die bisher eingesetzten Hilfsstoffe für die Herstellung von Granulaten erfüllen die Summe dieser Anforderungen nicht oder nur in ungenügenden Maße (siehe R. Bast, Keramische Zeitschrift 42 (3), S. 155-156 (1990)). So ergeben Zusätze von Carboxymethylcellulose zwar Granulate mit guter Festigkeit, was für den Transport wichtig ist, gleichzeitig führen sie aber zu hohen Rückdehnungen, was zu Spannungen bei der Lagerung der Preßlinge und dann zu Rissen beim Brennen führt. Polyacrylat-Zusätze sind im Hinblick auf geringe Rückdehnung günstig, führen aber zu Granulaten mit nur mäßiger Festigkeit. Zusätze von Methylcellulose und Polyvinylalkohol führen zwar zu Granulaten mit guter Festigkeit, jedoch wird dann die Enddichte schlecht.

Bei anderen Granulaten ist deren gute Redispergierbarkeit wichtig. So ist es technisch, ökologisch und wirtschaftlich vorteilhaft, wenn sich Granulate, die z.B. Füllstoffe für Polymere oder Pigmente für Lacke oder Anstrichfarben enthalten, mit möglichst geringem Aufwand wieder unter Freisetzung der Primärpartikel redispergieren lassen.

Überraschend wurde nun gefunden, daß als Zusatzstoffe Polyurethane und/oder Polyharnstoffe und Polyether, gegebenenfalls kombiniert mit weiteren Polymeren, besonders geeignet sind zur Herstellung von Granulaten aus pulverigen Stoffen.

Die erfindungsgemäßen Granulate erfüllen überraschenderweise die vorstehend beschriebenen Anforderungen.

Erfindungsgemäße Granulate können beispielsweise 0,01 bis 30 Gew.-% Polyurethane und/oder Polyharnstoffe, 0,01 bis 30 Gew.-% Polyether und 0 bis 60 Gew.-% weitere Polymere, insgesamt jedoch nicht mehr als 65 Gew.-% dieser drei Komponenten enthalten.

Bevorzugte erfindungsgemäße Granulate enthalten 0,02 bis 20 Gew.-% Polyurethane und/oder Polyharnstoffe, 0,02 bis 20 Gew.-% Polyether, 0 bis 30 Gew.-% weitere Polymere und insgesamt nicht mehr als 35 Gew.-% dieser drei Komponenten.

Besonders bevorzugte erfindungsgemäße Granulate enthalten 0,05 bis 10 Gew.-% Polyurethane und/oder Polyharnstoffe, 0,05 bis 10 Gew.-% Polyether, 0 bis 20 Gew.-% weitere Polymere und insgesamt nicht mehr als 25 Gew.-% dieser drei Komponenten.

Erfindungsgemäße Granulate können gegebenenfalls übliche Hilfsstoffe enthalten, beispielsweise in Mengen von 0 bis 35 Gew.-%, bezogen auf pulvrige Stoffe.

Der Feuchtigkeitsgehalt erfindungsgemäßer Granulate kann beispielsweise bis zu 10 Gew.-%, bezogen auf das fertige Granulat, betragen. Die Feuchtigkeit kann von Wasser und/oder Lösungsmitteln herrühren.

Die Polyurethane und Polyharnstoffe werden zweckmäßigerweise in Form von Lösungen oder Dispersionen eingebracht. Diese können als Lösungs- oder Dispergiermittel Wasser und/oder organische Lösungsmittel enthalten. Bevorzugt ist Wasser. Als organische Lösungsmittel kommen beispielsweise Methylethylketon, Tetrahydrofuran, Dimethylformamid und N-Methylpyrrolidon in Frage. Solche Lösungen können beispielsweise einen Gehalt an Polyurethanen und/oder Polyharnstoffen von 2 bis 60 Gew.-%, vorzugsweise von 10 bis 40 Gew.-% aufweisen. Bevorzugt sind wässrige Dispersionen mit einem Gehalt an Polyurethanen und/oder Polyharnstoffen von 2 bis 60 Gew.-%, insbesondere 5 bis 40 Gew.-%.

Die gegebenenfalls vorhandenen weiteren Polymere werden zweckmäßigerweise in Form von Polymerdispersionen eingebracht, sie können auch als Lösungen eingesetzt werden, z.B. Lösungen von Cellulosederivaten, Polyvinylalkohol, Stärke oder Polyvinylpyrrolidon. Solche Dispersionen können auf der Basis von Wasser und/oder organischen Lösungsmitteln hergestellt worden sein Bevorzugt ist Wasser Als organische Lösungsmittel kommen beispielsweise die oben für Polyurethane und Polyharnstoffe genannten in Frage. Solche Dispersionen können beispielsweise einen Gehalt an Polymeren von 5 bis 60 Gew.-%, vorzugsweise 10 bis 50 Gew.-% aufweisen. Die mittels Laser-Streulicht-Korrelationsspektroskopie gemessenen mittleren Teilchendurchmesser der dispergierten Polymere können beispielsweise im Bereich 20 bis 1000 nm, vorzugsweise 50 bis 500 nm liegen.

Die erfindungsgemäß zu verwendenden Polyurethane sind vorzugsweise lösliche oder dispergierbare Typen. Es kann sich dabei beispielsweise um reine Polyurethane handeln und/oder um solche, bei denen ein Teil der Polyurethangruppen durch Polyharnstoffgruppen ersetzt wurde. Bevorzugte Polyurethane sind erhältlich aus wenigstens einem Diisocyanat und wenigstens einem Makropolyol, worunter eine höhermolekulare, hydroxylgruppenhaltige Verbindung mit einem Molekulargewicht von über 400 verstanden wird. Gegebenenfalls kann zusätzlich wenigstens ein kurzkettiger Kettenverlängerer mit einem Molekulargewicht von unter 400, insbesondere ein kurzkettiges Diol eingesetzt werden.

Geeignet sind grundsätzlich alle bekannten aromatischen, alicyclischen und/oder aliphatischen Polyisocyanate, die nicht so stark verzweigt oder vernetzt sind, daS sie unlöslich oder nicht dispergierbar werden, Lineare Produkte können aus Diisocyanaten der Formel $Q(NCO)_2$ erhalten werden, in welcher Q für einen aromatischen Kohlenwasserstoffrest mit 6 bis 15 Kohlenstoffatomen oder für einen aliphatischen, cycloaliphatischen oder gemischt aliphatisch/cycloaliphatischen Kohlenwasserstoffrest mit je 2 bis 14 Kohlenstoffatomen steht. Beispiele solcher Diisocyanate sind Toluylendiisocyanat, Naphthylendiisocyanat, Diphenylmethandiisocyanat, Hexamethylendiisocyanat (HDI), Isophorondiisocyanat (IPDI), Cyclohexan-1,4-diisocyanat und Perhydrodiphenylmethandiisocyanat. Diese Isocyanate können auch als Gemisch eingesetzt werden. Bevorzugt sind IPDI, HDI, TDI und Perhydrodiphenylmethandiisocyanat ($H_{12}MDI$).

Als Makropolyole kommen z,B. Polyester-, Polyether-, Polythioether-, Polylacton-, Polycarbonat-, Polyestercarbonat-, Polyethercarbonat-, Polyacetal- und Polyesteramid-polyole in Frage. Bevorzugt weisen die Makropolyole eine OH-Funktionalität von zwei auf.

Als Makropolyole einsetzbare Polyesterpolyole können beispielsweise Umsetzungsprodukte von mehrwertigen, vorzugsweise zweiwertigen und gegebenenfalls dreiwertigen Alkoholen mit mehrwertigen, vorzugsweise zweiwertigen, Carbonsäuren sein, Anstelle der freien Polycarbonsäuren können auch die entsprechenden Polycarbonsäureanhydride oder entsprechende Polycarbonsäureester von niedrigen Alkoholen oder deren Gemische zur Herstellung der Polyesterpolyole verwendet werden, Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Polyethylenglykole, Dipropylenglykol, Polypropylenglykole, Dibutylenglykol und Polybutylenglykole in Frage.

Als Makropolyole einsetzbare Polyether können von an sich bekannter Art sein und z.B. durch Polymerisation von Epoxiden wie Ethylenoxid, Propylenoxid, Styroloxid oder Epichlorhydrin mit sich selbst, z.B. in Gegenwart von Lewis-Katalysatoren wie $BF_3$, oder durch Anlagerung dieser Epoxide, vorzugsweise im Gemisch oder nacheinander, an Startermoleküle mit reaktionsfähigen Wasserstoffatomen wie Wasser, Diole (z.B. Ethylenglykol, Propylenglykol-(1,3) oder -(1,2), 4,4'-Dihydroxy-di-phenylpropan) und primäre Amine (z.B. Anilin, Methylamin) hergestellt werden, Auch Tetrahydrofuran-Polymere können eingesetzt werden.

Bevorzugt sind Polyether, die überwiegend primäre OH-Gruppen aufweisen, z.B. bis zu 90 Gew.-%, bezogen auf alle im Polyether vorhandenen OH-Gruppen. Auch OH-Gruppen enthaltende Polybutadiene können als Makropolyole eingesetzt werden.

Als Polythioetherdiole seien insbesondere die Kondensationsprodukte von Thioglykol mit sich selbst und/oder mit anderen Glykolen, Dicarbonsäuren, Formaldehyd und/oder Aminocarbonsäuren angeführt. Je nach den Co-Komponenten handelt es sich dabei z.B. um Polythiomischetherdiole, Polythioetheresterdiole oder Polythioetheresteramiddiole. Unter Polylactondiolen sind Produkte zu verstehen, die man z.B. erhält, wenn man eine ringöffnende Polymerisation eines Monolactons unter Verwendung eines oben als Startermolekule für die Anlagerung von Epoxiden beschriebenen Diole durchführt. Geeignete Lactone sind beispielsweise Butyrolacton und $\epsilon$-Caprolacton.

Polycarbonatdiole können an sich bekannte Stoffe sein, die z.B. durch Umsetzung von Diolen wie Propandiol-(1,3), Butandiol-(1,4), Hexandiol-(1,6), Diethylenglykol, Triethylenglykol, Tetraethylenglykol und/oder Thiodiglykol mit Diarylcarbonaten, z.B. Diphenylcarbonat, oder Phosgen hergestellt werden können (siehe DE-A 1 694 080, DE-A 1 915 908, DE-A 2 221 751 und DE-A 2 605 024). Wenn für diese Umsetzung anstelle der Diole kurzkettige Polyetherdiole oder Polyesterdiole verwendet werden, entstehen Polyethercarbonat- oder Polyestercarbonatdiole.

Als Polyacetaldiole kommen z.B. die aus Glykolen, wie Diethylenglykol, Tetraethylenglykol, 4,4'-Dioxethoxydiphenyldimethylmethan und Hexandiol, und Formaldehyd hergestellbaren Verbindungen in Frage. Auch durch Polymerisation cyclischer Acetale, z.B. Trioxan, lassen sich Polyacetaldiole herstellen. Polyesteramid- und Polyamid-diole kann man z.B. aus zweiwertigen gesättigten Carbonsäuren oder deren Anhydriden und zweiwertigen gesättigten Aminoalkoholen, Diaminen und/oder deren Mischungen als lineare Kondensate erhalten.

Anstelle von oder zusätzlich zu Makropolyolen können Makropolyamine, insbesondere Makrodiamine, zum Einsatz gelangen. Derartige Makropolyamine können beispielsweise aus Polyetherpolyolen durch direkte Umsetzung mit Ammoniak hergestellt werden (siehe DE-B 1 215 373). Man kann auch Makropolyole mit Diisocyanaten umsetzen, so Isocyanat-Prepolymere erhalten und diese zu Makropolyaminen hydrolysieren. Aus einer Isocyanatgruppe und einer Aminogruppe bildet sich dann eine Harnstoffgruppe.

Erfindungsgemäß zu verwendende Polyurethane und/oder Polyharnstoffe können unter Verwendung von in der Polyurethan-Chemie üblichen Kettenverlängerern, z.B. kurzkettigen, in der Regel gegenüber Isocyanaten difunktionellen Alkoholen, Aminen oder Aminoalkoholen hergestellt worden sein. Beispiele für derartige Verbindungen sind Ethylenglykol, 1,4-Butandiol, 1,6-Hexandiol, Neopentylglykol, Hydrochinon-bis-2-hydroxyethylether, 1,4-Cyclohexandiol, Diethylenglykol, 4,4'-Dihydroxydicyclohexylmethan, Ethylendiamin, N,N'-Dimethylethylendiamin, 1,6-Diaminohexan, N,N',N"-Trimethyl-diethylentriamin, Piperazin, Aminoethylpiperazin, Ethanolamin, N-2-Hydroxyethylpiperazin, Aminoethansulfonsäure-(salzen), Dimethylpropionsäure, Lysin und andere Diamino- und/oder Dihydroxycarbonsäuren.

Erfindungsgemäß zu verwendende Polyurethane und/oder Polyharnstoffe können unter Verwendung von in der Polyurethanchemie üblichen Kettenreglern hergestellt worden sein Es kann sich dabei um monofunktionelle Isocyanate, Alkohole und/oder Amine handeln, beispielsweise um Butylisocyanat, Phenylisocyanat, Ethanol, Isopropanol, Decanol, Dibutylamin, Hexylamin und/oder Morpholin.

Erfindungsgemäß zu verwendende Polyurethane und/oder Polyharnstoffe können mit in der Polyurethanchemie üblichen Hilfs- und Zusatzstoffen hergestellt worden sein. Beispielsweise kann es sich dabei um Katalysatoren wie Zinn-II-octoat, Dibutylzinndilaurat, Titantetrabutylat, Eisen-II-acetylacetonat, Diazabicyclooctan oder N,N-Tetramethylethylendiamin handeln.

Die erfindungsgemäß zu verwendenden Polyurethane und/oder Polyharnstoffe können auch Gemische von verschiedenen Polyurethanen und/oder Polyharnstoffen sein, z.B. Gemische aus aliphatischen und aromatischen Polyurethanen.

Für die vorliegende Erfindung sind ebenfalls Polyurethane geeignet, die wäßrige Dispersionen bilden können. Solche Polyurethane kann man z.B. erhalten, wenn bei der Herstellung Komponenten (mit-)verwendet werden, welche ionische oder zur Ionenbildung befähigte Gruppen und daneben noch mindestens eine NCO-Gruppe und/oder mindestens ein mit Isocyanatgruppen reagierendes Wasserstoffatom aufweisen. Als Verbindungen dieser Art kommen, gegebenenfalls auch in Mischung, zum Beispiel die folgenden in Frage (siehe auch US-PS 3 756 992, US-PS 3 479 310 und US-PS 4 108 814):

a) Verbindungen, die basische, mit wäßrigen Säuren neutralisierbare oder quaternierbare tertiäre Aminogruppen aufweisen,

wie alkoxylierte aliphatische, cycloaliphatische, aromatische und heterocyclische, primäre und sekundäre Amine, z.B. N,N-Dialkylalkanolamine, 1-Dimethylaminopropanol-(2), N,N-Alkyl-$\beta$-hydroxyalkyl-aniline, N-alkyldialkanolamine, polyalkoxyliertes Alkyldialkanolamin und Polyester mit tert. Aminogruppen,

wie durch Hydrierung erhaltene Additionsprodukte von Alkylenoxyd und Acrylnitril an primäre Amine,

z.B. N-Alkyl-N-(3-aminoalkyl)-alkanolamine,
wie Amine,
wie durch Hydrierung von Anlagerungsprodukten von Acrylnitril an primäre oder disekundäre Amine erhältliche Produkte, z.B. Bis-(3-aminoalkyl)-alkylamine, Bis-(3-aminopropyl)-anilin oder -toluidin, Diaminocarbazol, Tris-(aminopropyl)-amin und N,N'-Bis-carbonamidoalkylpolymethylendiamine,
und wie durch Anlagerung von Acrylamid an Diamine oder Diole erhältliche Verbindungen.
b) Verbindungen, die zu Ouaternierungsreaktionen befähigte Halogenatome oder entsprechende Ester starker Säuren enthalten wie Halogenalkanole, Halogenalkylamine, Alkanolamin-Schwefelsäure-Ether und Polyester mit aliphatisch gebundenem Halogen oder 1,3-Dichlorpropanol-2, sowie halogenhaltige Isocyanate.
c) Verbindungen, die zur Salzbildung befähigte Carbonsäure- oder Hydroxylgruppen aufweisen,
wie Hydroxy- und Mercapto-carbonsäuren:
Glykolsäure, Thioglykolsäure, Harnsäure, Barbitursäure, Resole und andere Formaldehyd-Phenolkondensationsprodukte,
wie Polycarbonsäuren, z.B. Sulfondiessigsäure, Nitrilotriessigsäure, Ethylendiamintetraessigsäure, Thiodiglykolsäure, Malonsäure, Maleinsäure, Gallussäure, Phthalsäure, Isophthalsäure und Terephthalsäure,
wie Aminocarbonsäuren, z.B. Oxalursäure, Anilinoessigsäure, 2-Hydroxycarbazolcarbonsäure-(3), Glycin, Sarkosin, Methionin und $\alpha$- und $\beta$-Alanin,
wie Hydroxy- und Carboxy-sulfonsäuren, z.B. Hydroxyalkansulfonsäuren, Phenolsulfonsäuren, Sulfoessigsäure, Sulfobenzoesäuren, Benzoesäure, Sulfonsäuren und Naphtholsulfonsäuren und
wie Aminosulfonsäuren, z.B. Amidosulfonsäure, Hydroxylamin-monosulfonsäure, Hydrazinsulfonsäure, Sulfanilsäure, N-Arylaminomethansulfonsäuren und Naphthylaminsulfonsäuren.

Als salzbildende Säuren für die Gruppe a) kommen anorganische und organische Säuren sowie Verbindungen mit reaktiven Halogenatomen und entsprechende Ester starker Säuren in Betracht. Einige Beispiele für derartige Verbindungen sind Salzsäure, Salpetersäure, Amidosulfonsäure, Essigsäure, Milchsäure, Halogenessigsäuren, Halogenessigsäurealkylester, Sorbit-borsäure, Methylhalogenide, Dialkylsulfate, Benzylchlorid, Chloressigester, Halogenacetamide, Dihalogenalkane und Epoxide.

Die Verbindungen der Gruppe b) können z.B. mit tertiären Aminen, Sulfiden oder Phosphinen quaterniert oder terniert werden, wobei dann quarternäre Ammonium- oder Phosphonium- oder ternäre Sulfoniumsalze entstehen. Beispiele dafür sind Trialkylamine, Pyridin, Trialkanolamine, Dialkylsulfide, Trialkylphosphine, Alkylarylphosphine und Triarylphosphine.

Für die Verbindungen der Gruppe c) eignen sich anorganische und organische Basen als Salzbildner, z.B. Alkalihydroxide, -carbonate, -hydrogencarbonate, Ammoniak und Amine, sowie organische Phosphorverbindungen, die zur Salzbildung fähig sind, wie einbaufähige basische Phosphine (z.B. Methyl-bis-$\beta$-hydroxyethylphosphin) und wie Derivate von Phosphinsäuren, Phosphonigsäuren und Phosphonsäuren, Ester der phosphorigen und der Phosphorsäure sowie deren Thionanaloge.

Geeignete kationische Polyurethane können z.B. nach der DE-AS 1 270 276 erhalten werden, wenn beim Aufbau des Polyurethans mindestens eine Komponente mit einem oder mehreren basischen tertiären Stickstoffatomen mitverwendet wird und die basischen tertiären Stickstoffatome des Polyurethans mit Alkylierungsmitteln oder Säuren umgesetzt werden. Dabei ist es grundsätzlich gleichgültig, an welcher Stelle des Polyurethanmakromoleküls sich die basischen Stickstoffatome befinden. Man kann auch Polyurethane mit reaktiven, zur Quarternierung befähigten Halogenatomen mit tertiären Aminen umsetzen. Kationische Polyurethane lassen sich auch unter kettenaufbauender Quarternierung herstellen, indem man z.B. aus Diolen und Isocyanaten mit reaktiven Halogenatomen oder Diisocyanaten und Halogenalkoholen Dihalogenurethane herstellt und diese mit ditertiären Aminen umsetzt. Man kann auch aus Diisocyanaten und tertiären Aminoalkoholen ditertiäre Diaminourethane herstellen und diese mit reaktionsfähigen Dihalogenverbindungen umsetzen. Die kationische Polyurethanmasse kann auch aus einer kationischen salzartigen Ausgangskomponente, etwa einem quarternierten basischen Polyether oder einem quartären Stickstoff enthaltenden Isocyanat hergestellt werden. Diese Herstellungsmethoden sind z.B. in den deutschen Auslegeschriften 1 184 946, 1 178 586 und 1 179 363, der US-Patentschrift 3 686 108 und den belgischen Patentschriften 653 223, 658 026 und 636 799 beschrieben. Dort sind auch zum Aufbau von salzartigen Polyurethanen geeignete Ausgangsmaterialien aufgeführt.

Die Herstellung von anionischen Polyurethandispersionen kann ebenfalls nach an sich bekannten Verfahren erfolgen. Geeignete anionische Polyurethane werden beispielsweise in der DE-AS 1 237 306, der DE-OS 1 570 565, der DE-OS 1 720 639 und der DE-OS 1 495 847 beschrieben.

Man kann bei der Herstellung von anionischen Dispersionen auch von Polyurethanen mit freien Hydroxyl- und/oder Aminogruppen ausgehen und diese mit aliphatischen oder aromatischen Aldehyden und einem Metallsulfit, Metallhydrosulfit, Metallaminocarboxylat oder Metallaminosulfat umsetzen. Eine weitere

Möglichkeit besteht darin, Polyurethane mit freien Hydroxyl- und/oder Aminogruppen mit cyclischen Verbindungen umzusetzen, die salzartige oder nach der Ringöffnung zur Salzbildung befähigte Gruppen aufweisen (siehe DE-AS 1 237 306).

Geeignete ionische Polyurethane können auch gemäß der DE-AS 1 770 068 über eine Formaldehyd-Polykondensation aufgebaut werden, beispielsweise durch umsetzen höhermolekularer Polyisocyanate mit einem Überschuß an Verbindungen mit endständigen Methylolgruppen, dispergieren des Methylolgruppen aufweisenden Reaktionsprodukts in Wasser und vernetzen durch Wärmebehandlung.

Es ist auch möglich, für die vorliegende Erfindung Produkte einzusetzen, wie sie in den deutschen Offenlegungsschriften Nr, 1 953 345, 1 953 348 und 1 953 349 beschrieben werden.

Zur Herstellung feinteiliger Polyurethane in wäßrigen Medien sind eine Vielzahl von Verfahren bekannt. Vorzugsweise kann man dabei Polyurethan-präpolymere mit entständigen Isocyanat- oder Methylol-Gruppen einsetzen, wobei man sehr hochprozentige Lösungen verwenden oder auch ganz lösungsmittelfrei arbeiten kann. Die primär gebildeten groben Emulsionen können durch Reaktion der Isocyanatgruppen mit Wasser oder in der wäßrigen Phase gelösten Di- oder Polyaminen unter Kettenverlängerung und Vernetzung in hochmolekulare Polyurethan-harnstoffsuspensionen übergeben.

Auch durch Eindüsen von hochmolekularen Polyurethanen oder deren reaktiven Vorläufern in Wasser oder organische Nichtlöser lassen sich geeignete Suspensionen herstellen.

Eine detaillierte Beschreibung der Herstellung von vernetzten ionischen Polyurethansuspensionen findet sich z.B. in den Deutschen Auslegeschriften Nr. 1 495 745 (US-Patent 3 479 310), 1 282 962 (Kanad. Patent Nr. 837 174) und 1 694 129 (Britisches Patent Nr. 1 158 088) sowie den Deutschen Offenlegungsschriften Nr. 1 595 687 (US-Patent 3 814 095), 1 694 148 (US-Patent 3 622 527), 1 729 201 (Britisches Patent Nr. 1 175 339) und 1 770 068 (US-Patent Nr. 3 756 992).

Die Herstellung von nichtionischen emulgatorfreien Polyurethandispersionen kann beispielsweise nach dem Verfahren der DE-OS 2 141 807 erfolgen.

Selbstdispergierbare, nichtionische Polyurethandispersiionen können gemäß den Deutschen Offenlegungsschriften 2 314 512, 2 314 513 und 2 320 719 auch hergestellt werden, indem man in lineare Polyurethane über Allophanat- oder Biuretgruppen gebundene seitenständige Polyethylenoxideinheiten einbaut.

Es können auch Dispersionen verwendet werden, die mit Hilfe von Emulgatoren hergestellt wurden. Produkte dieser Art sind beispielsweise in der DE-AS 1 097 673 und bei S.P. Suskind, Journal of Applied Polymer Science, 9 (1965), Seiten 2451-2458 beschrieben.

Weitere Einzelheiten über einsetzbare Polyurethandispersionen und deren Herstellung sind in der DE-OS 4 009 758 entnehmbar.

Die erfindungsgemäß als solche zu verwendenden Polyether können Additionsprodukte von Alkylenoxiden, bevorzugt von Ethylenoxid und/oder Propylenoxid an Startermoleküle mit einem oder mehreren aktiven Wasserstoffatomen sein. Die erfindungsgemäß als solche zu verwendenden Polyether können endständige Hydroxylgruppen enthalten. Hydroxylendgruppen können aber auch nach an sich bekannten Methoden verkappt werden, z.B. durch Veresterung, Veretherung oder Umsetzung mit Isocyanaten. Erfindungsgemäß als solche zu verwendende Polyether können mono-, di- oder polyfunktionell sein und sind im allgemeinen löslich oder dispergierbar in Wasser oder organischen Lösungsmitteln. Als Beispiele für Startermoleküle seien genannt: mono-, di- und polyfunktionelle aliphatische Alkohole, mono-, di- und polyfunktionelle aromatisch/aliphatische Alkohole, gegebenenfalls alkylierte Phenole, andere aromatische Mono- Hydroxylverbindungen, Glycerin, Trimethylolpropan, Pentaerythrit, Sorbit, Amine wie Ethylenamin, Polyethylenimine und Aminopolyether.

Aus verschiedenen Polyalkylenoxiden aufgebaute Blockpolyether können einen statistischen oder einen blockartigen Aufbau aufweisen. Es können auch Gemische aus zwei oder mehreren Polyethern eingesetzt werden.

Für die vorliegende Erfindung als Polyether zu verwendende Polyetherpolyole sind häufig an sich bekannte Verbindungen, die im Handel bezogen oder gegebenenfalls auf an sich bekannte Weise hergestellt werden können (siehe z.B. DE-A 27 56 770, DE-A 33 30 197, US-A 4 481 367, US-A 2 979 528, US-A 2 674 619, US-A 3 472 781, US-A 4 452 712, US-A 2 677 700, EP-A 54 953, EP-A 47 371, EP-A 116 564, EP-A 109 515, DD-PS 237 178, DE-A 22 20 338, Macromolecules 20 Seiten 3089-3091 (1987) und Technical Data on Pluronic® Polyols Kundenzirkular der Fa. BASF-Wyandotte Corp.).

Bei den erfindungsgemäß gegebenenfalls einzusetzenden weiteren Polymeren kann es sich z.B. um Polybutadien, Poly(Butadien/Styrol), Polyvinylacetat, Poly(Styrol/(Meth)-acrylat) und/oder Poly-(Butadien/Styrol/Acrylnitril) handeln. Im Prinzip kommen alle Polymere aus miteinander copolymerisierbaren Monomeren in Frage, wobei es sich bei den Monomeren beispielsweise um Butadien, Styrol, Acrylnitril, Alkylacrylate, Meth-acrylate, (Meth-)Acrylsäure, Maleinsäurederivate, Olefine und Diene handeln kann. Von

besonderem Interesse sind Vinylacetat-Ethylen-Copolymere, Polyacrylate, Styrol-acrylat-Copolymere und Kautschuke in Form von Latices.

Geeignet sind auch Polysiloxane, die gegebenenfalls reaktive Gruppen enthalten können und Polymere aus anderen reaktionsfähigen Systemen, z.B. aus Polyisocyanatprepolymeren, ungesättigten Polyesterharzen und Epoxidharzen. Man kann auch Monomere einsetzen, die nach dem Vermischen mit Wasser zur Polymerisation gebracht werden, z.B. Acrylsäure.

Als olefinische Monomere zur Herstellung von gegebenenfalls erfindungsgemäß zu verwendenden Polymeren seien beispielhaft genannt:

$\alpha,\beta$-olefinisch ungesättigte Monocarbonsäuren mit 3 bis 5 C-Atomen, deren Ester, Nitrile und Amide wie Acryl-, Methacryl- und Crotonsäure, Acryl- und Methacrylsäureamide, Acryl- und Methacrylnitril, Ester der Acryl- und Methacrylsäure, insbesondere solche mit gesättigten einwertigen aliphatischen, cycloaliphatischen oder aromatischen Alkoholen mit 1 bis 20 Kohlenstoffatomen, Monoester von $\alpha,\beta$-monoolefinisch ungesättigten Monocarbonsäuren mit 3 bis 4 C-Atomen mit zweiwertigen gesättigten aliphatischen Alkoholen mit 2 bis 4 C-Atomen und Aminoalkylester und Aminoalkylamide der Acryl- und Methacrylsäure. Auch Monomere mit zwei oder mehr Doppelbindungen im Molekül können eingesetzt werden. Hiermit können dann verzweigte oder vernetzte Polymerpartikel, sogenannte Mikrogele, erhalten werden. Als Monomere hier für sind z.B. Ethylenglykoldiacrylat oder -methacrylat geeignet.

$\alpha,\beta$-olefinisch ungesättigte Dicarbonsäuren mit 3 bis 5 C-Atomen und deren Derivate, wie Fumarsäure, Maleinsäure, Itaconsäure und Mono- und Diester solcher Dicarbonsäuren mit 1 bis 18 C-Atomen enthaltenden Alkoholen.

Mono- und Diester des Vinylalkohols mit Carbonsäuren oder Vinylether, Vinylketone und Vinylamide.

Vinylverbindungen von Aromaten und Heterocyclen.

N-Methylolether des Acrylsäure- und Methacrylsäureamids z.B. gemäß der Formel (I)

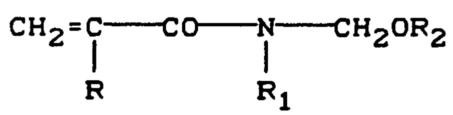

(I),

in der

R für Wasserstoff oder Methyl,

$R_1$ für Wasserstoff, $C_1$-$C_6$-Alkyl, $C_7$-$C_{12}$-Aralkyl oder $C_6$-$C_{10}$-Aryl,

$R_2$ für $C_1$-$C_6$-Alkyl oder $C_5$-$C_7$-Cycloalkyl stehen

und die entsprechenden nicht-veretherten N-Methylolverbindungen des Acryl- und Methacrylamids.

Mannichbasen des Acrylsäure- und Methacrylsäureamids z.B. gemäß der allgemeinen Formel (II)

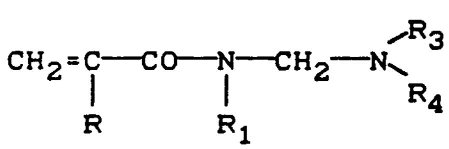

(II),

in der

R und $R_1$ die gleiche Bedeutung wie bei Formel (I) haben und

$R_3$ und $R_4$ für $C_1$-$C_6$-Alkyl, $C_5$-$C_7$-Cycloalkyl oder gemeinsam für einen heterocyclischen Rest, z.B. einen Morpholinrest, stehen.

Acryl- und Methacrylsäurederivate mit einer endständigen Halogenmethylcarbonylgruppe z.B. der allgemeinen Formel (III)

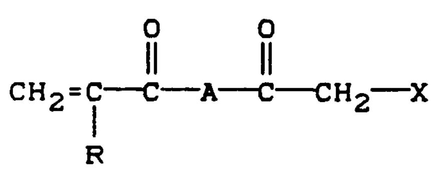

(III),

in der

R für Wasserstoff oder Methyl,

A für eine der Gruppen $-NH-CH_2-NH-$, $-NH-CO-NH-$,

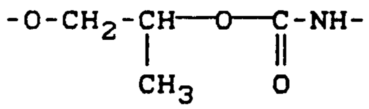 oder 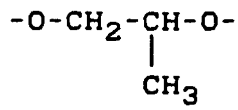 und

X für Chlor oder Brom stehen.

Allylverbindungen, z.B. Triallylcyanurat, Triallylphosphat, Allylalkohol und Allylamin.

Monoolefinisch ungesättigte aliphatische Kohlenwasserstoffe mit 2 bis 6 C-Atomen, z.B. Ethylen, Propylen, Butylen und Isobutylen.

Konjugierte Diolefine mit 4 bis 6 C-Atomen, z.B. Butadien, Isopren, 2,3-Dimethylbutadien und Chlorbutadien und

Norbornen und Hydroxymethylnorbornen.

Vorzugsweise werden eingesetzt die Polymere von Acryl- und Methacrylsäureestern mit 1 bis 12 C-Atomen im Alkoholrest, Acrylsäure, Methacrylsäure, von $C_2$-$C_4$-Hydroxyalkylestern dieser Säuren, von Styrol, Acrylnitril, Methacrylnitril, Vinylacetat, Vinylpropionat, Ethylen, Propylen und/oder Butadien.

Die Polymerisation der Monomeren kann auf die an sich bekannte Weise der Emulsionspolymerisation durchgeführt werden. Man erhält dann, gegebenenfalls nach Verdünnung oder Aufkonzentration Polymere enthaltende Dispersionen, die erfindungsgemäß eingesetzt werden können. Geeignete Polymerisationsbedingungen sind z.B. Temperaturen von 10 bis 150 ° C, die Gegenwart von 0,05 bis 5 Gew.-% Initiatoren, die Gegenwart von 1 bis 10 Gew.-% Emulgatoren, pH-Werte von 2 bis 10 und gegebenenfalls Zusätze von üblichen Molekulargewichtsreglern in Mengen von 0,1 bis 2 Gew.-% (bezogen auf die Monomermischung). Die so erhaltenen Dispersionen können mit gleichgeladenen Dispersionen abgemischt werden.

Pulverförmige Materialien, mit denen erfindungsgemäße Granulate hergestellt werden können, sind beispielsweise Füllstoffe wie Calciumcarbonat, Dolomit, Talkum, Kaolin, Wollastonit, Quarzmehl, synthetische Silikate, Gips, keramische Pulver wie Aluminiumoxid, Aluminiumhydroxid, Titandioxid, Zirkonoxid, Siliciumnitrid, Silicium und Siliciumcarbid, Porzellanmassen für die traditionelle Keramik, Feldspat, Kaolin, Quarzmehl, Metallpulver wie solche aus Eisen, Nickel und deren Legierungen, Pigmente wie Titandioxid, Eisenoxide, Chromoxide, Chinacridone und andere organische Pigmente, Siliciumdioxid, Kohle, Glaspulver, Emailpulver, Graphit, Aktivkohle, Wirkstoffe wie solche mit pharmazeutischen oder Pflanzenschutz-Wirkungen sowie sonstige organische und anorganische Pulver wie Kautschukchemikalien, organische Rohstoffe für Synthesen, Katalysatoren und Salze.

Die Pulver können zur Herstellung der erfindungsgemäßen Granulate trocken oder in Form von wäßrigen oder nichtwäßrigen Dispersionen eingesetzt werden.

Außer den bisher beschriebenen Bestandteilen können die erfindungsgemäßen Granulate gegebenenfalls Hilfsstoffe enthalten, z.B. zur Herstellung von Dispersionen übliche Dispergiermittel, z.B. Polyacrylsäuresalze und/oder Zitrate, Stabilisierungsmittel, Biozide und/oder Oberflächenmodifizierungsmittel, sowie Weichmacher, Pigmente, Fluß- und Kieselsäuresole, Aluminiumtone, Alginate, Sulfitablaugen oder Polyphosphate.

Die Komponenten der erfindungsgemäßen Granulate können je nach dem Anwendungszweck in variierenden Verhältnissen eingesetzt werden. Die optimalen Mengenverhältnisse der Komponenten kann der Fachmann gegebenenfalls durch wenige Vorversuche leicht ermitteln. Wenn eine hohe Festigkeit der Granulate von besonderer Bedeutung ist, ist es vorteilhaft, Polymerdispersionen z.B. in Mengen bis zu 80 Gew.-% (bezogen auf die Summe der vorhandenen Polyurethane, Polyharnstoffe, Polyether und weiteren Polymere) einzusetzen. Wenn eine gute Verpreßbarkeit und/oder eine gute Redispergierbarkeit der Granulate von besonderer Bedeutung ist, ist es vorteilhaft Polymerdispersionen gar nicht oder in Mengen von weniger als 50 Gew.-% (bezogen auf die Summe der vorhandenen Polyurethane, Polyharnstoffe, Polyether und weiteren Polymere) einzusetzen Auch das Verhältnis von Polyurethanen und/oder Polyharnstoffen zu Polyethern kann je nach Anwendungszweck variiert werden. Wird z.B. eine gute Redispergierbarkeit in wäßrigen Medien angestrebt, so ist es vorteilhaft, den Anteil an monofunktionellen Polyethern zu erhöhen.

Die erfindungsgemäßen Granulate können beispielsweise weitere Polymere einerseits und Polyurethane und/oder Polyharnstoffe und Polyether andererseits im Gewichtsverhältnis 1:100 bis 100:1, bevorzugt 1:30 bis 30:1, besonders bevorzugt 1:10 bis 10:1 enthalten. Das Gewichtsverhältnis von Polyurethanen und/oder Polyharnstoffen zu Polyethern kann beispielsweise 20:1 bis 1:20, bevorzugt 10:1 bis 1:10, besonders

bevorzugt 5:1 bis 1:5 betragen. Bei den weiteren Polymeren kann es sich auch um Dispersionen handeln, die natürliche und/oder synthetische Wachse und/oder Paraffine enthalten.

Die Menge an gegebenenfalls einzusetzenden erfindungsgemäßen Verbindungen kann je nach Anwendungszweck der erfindungsgemäßen Granulate variiert werden. Z.B. bei Granulaten, die Pigmente enthalten und Porzellanmassen-Granulaten ist es vorteilhaft, 0 bis 6 Gew.-% erfindungsgemäße Verbindungen einzusetzen (bezogen auf das zu granulierende Pulver). Bei Füllstoffgranulaten zur Herstellung von Masterbatches kann diese Menge beispielsweise bis zu 35 Gew.-% betragen.

Die Herstellung der erfindungsgemäßen Granulate kann nach an sich bekannten Verfahren erfolgen. Besonders geeignet sind dabei Sprühtrocknung, Tellergranulation, Granulation im sogenannten Eirich-Mischer und die Wirbelschichtsprühgranulation. Diese Methoden eignen sich vorzugsweise zur Herstellung von Granulaten aus Pigmenten, wäßrigen Füllstoffdispersionen und Porzellanmassen. Bei der Herstellung von Materbatches sind Methoden aus der Kunststoffverarbeitung bevorzugt, z.B. Kneten oder Extrudieren. In diesem Falle ist es nicht notwendig, Polyurethane, Polyharnstoffe und/oder sonstige Polymere in Form von Dispersionen oder Lösungen zuzusetzen, man kann diese Stoffe dann auch in fester Form zudosieren.

Bei der Herstellung erfindungsgemäßer Granulate werden vorzugsweise sphärische Partikel gebildet. Mit denen lassen sich z.B. Formen schnell und gleichmäßig füllen, sie sind gegenüber den Beanspruchungen während des Transportes ausreichend fest und bei der Weiterverarbeitung problemlos zu zerstören. Zur Vermeidung von Dichteinhomogenitäten und Entmischungsvorgängen sind erfindungsgemäße Granulate vorzugsweise frei von Grobkorn.

Die Herstellung freifließender, staubarmer erfindungsgemäßer Granulate kann z.B. auch nach dem in Chem.-Ing.-Techn. 62 (10), S. 822-834 (1989) beschriebenen Verfahren erfolgen.

Von den Verfahren, die die feinen Teilchen zusammenfügen, führen die Verfahren der Aufbau-Agglomeration zu kugelförmigen Partikeln. Sie formen z.B. die trockenaufbereiteten Porzellanmassen durch Kapillarkräfte in Verbindung mit Abroll- und Mischbewegungen zu Partikeln und kommen dabei mit wenig Wasser aus. Obwohl dabei der Ernergieaufwand gering ist, hat sich dieser auf den ersten Blick kostengünstige Weg bisher noch nicht durchgesetzt.

Die Herstellung von Granulaten aus Dispersionen von Pulvern hat u.a. hingegen den Vorteil großer Homogenität sowohl der Masse als auch der einzubringenden Additive. Zudem sind Verunreinigungen durch Siebe und Magnete leicht zu eliminieren. Das Verfestigen naßaufbereiteter Pulver erfolgt im allgemeinen durch Sprühtrocknung. Wegen der kurzen Verweilzeiten werden die Sprühtürme mit hohen Ablufttemperaturen betrieben, um zu befriedigenden Durchsätzen zu kommen. Das hat jedoch einen hohen Energieaufwand zur Folge. Nachteilig ist u.a. auch der große Raumbedarf von Sprühtürmen und lange Anlaufzeiten bis zum Erreichen eines stationären Betriebszustandes. Außerdem sind die entstehenden Partikel oft innen hohl, was die Schüttdichte verringert.

Darüber hinaus ist für die Kompaktierung von Pulvern die Wirbelschicht-Sprühgranulation bekannt. Bei diesen Verfahren entstehen im Idealfall nahezu runde, kompakte Partikel. Das Grundprinzip dieses Verfahrens ist in zahlreichen Varianten realisiert worden, wie sie z.B. in der oben zitierten Literaturstelle aus Chem.-Ing.-Techn. dargelegt ist. Im Idealfall erfolgen die Verfahrensschritte Keimerzeugung, Trocknen, Formgebung und das selektive Austragen der Partikel, die die Wunschkorngröße erreicht haben, simultan mit einem Apparat (siehe z.B. EP-A 163 836). Maßstabsprobleme (bei größeren Granulatoren mit zentralem Austrag müssen die Partikel die Schicht auf weiteren Wegen durchwandern, so daß sie nicht mehr häufig genug am Sichtungsprozeß teilnehmen, was die Gefahr von Grobkornbildung erhöht) lassen sich durch einen modularen Aufbau vermeiden (siehe EP-A 332 929).

Es wurde auch ein Verfahren zur Herstellung von Granulaten aus pulverförmigen Stoffen gefunden, das dadurch gekennzeichnet ist, daß man

0,01 bis 30 Gew.-% Polyurethane und/oder Polyharnstoffe, vorzugsweise in gelöster oder dispergierter Form,

0,01 bis 30 Gew.-% Polyether,

0 bis 60 Gew.-% weitere Polymere, vorzugsweise in gelöster oder dispergierter Form, insgesamt jedoch nicht mehr als 65 Gew.-% dieser drei Komponenten,

(jeweils bezogen auf das Granulat)

sowie 0 bis 35 Gew.-% Hifsstoffe (bezogen auf pulverige Stoffe)

mit dem zu granulierenden Pulver mischt, dieses Gemisch auf an sich bekannte Weise granuliert und gegebenenfalls abschließend den Gehalt des Granulates an Wasser und/oder Lösungsmitteln auf weniger als 5 Gew.-% reduziert.

Für die Herstellung von Granulaten mit besonders guter Festigkeit kann man beispielsweise

0,02 bis 10 Gew.-% Polyurethane und/oder Polyharnstoffe,

0,02 bis 10 Gew.-% Polyether und

0,02 bis 10 Gew.-% weitere Polymere,
insgesamt jedoch nicht mehr als 25 Gew.-% dieser drei Komponenten (jeweils bezogen auf das Granulat) einsetzen.

Vorzugsweise setzt man dafür die drei Komponenten in Mengen von jeweils 0,05 bis 5 Gew.-%, insgesamt jedoch nicht mehr als 10 Gew.-% (jeweils bezogen auf das Granulat) ein.

Für die Herstellung von besonders gut redispergierbaren Granulaten kann man beispielsweise
0,02 bis 15 Gew..%, bevorzugt 0,05 bis 7 Gew.-% Polyurethane und/oder Polyharnstoffe und
0,02 bis 15 Gew.-%, bevorzugt 0,05 bis 7 Gew.-% Polyether (jeweils bezogen auf das Granulat) einsetzen.

Die Art der einzusetzenden Komponenten und, sofern diese als Lösungen oder Dispersionen eingesetzt werden, deren Gehalte an Feststoffen, können wie weiter oben beschrieben sein.

Erfindungsgemäße Granulate eignen sich insbesondere für die

- Herstellung von Geschirr- und/oder anderer traditioneller Keramik,
- Herstellung von Ingenieurkeramik,
- Herstellung von pulvermetallurgischen Erzeugnissen,
- Herstellung von Pigment- und/oder Füllstoffkonzentraten,
- Herstellung von Wirkstofformulierungen, z.B. im Pharma- und/oder Pflanzenschutzgebiet und/oder
- Bereitstellung von Hilfsstoffen, z.B. Kautschuk-Chemikalien, Fließhilfsmitteln oder Trennmitteln für Dispersionen, Compounds oder Kunststoffe.

## Beispiele

Die nachfolgenden Beispiele erläutern die vorliegende Erfindung weiter. Prozentangaben beziehen sich auf das Gewicht, soweit nichts anderes angegeben ist.

## Beispiel 1

In einem Labormixer wurden zu 100 g pulveriger Porzellanmasse (Restfeuchte 1 %) unter Intervallrühren 19 g wäßriger Additivzubereitung in kleinen Portionen zugegeben. Die Additivzubereitung bestand aus einem Gemisch aus

(1) 0,2 g eines Polymers aus 55 % n-Butylacrylat, 41 % Styrol und 4 % Methacrylsäure,
(2) 0,2 g eines Polyurethans aus Isophorondiisocyanat, Polyethylenglykol und Polyethylen-propylenglykolcopolymer,
(3) 0,08 g eines Diphenylpolyglykolethers,
(4) 0,012 g eines auf Trimethylolpropan gestarteten Polyetherpolyols aus 10 % Ethylenoxid und 90 % Propylenoxid und
(5) 18,4 g Wasser.

Das entstandene granulierte Gemisch wurde im Umlufttrockenschrank bis zum Erreichen einer Restfeuchte von 0,9 % getrocknet. Aus dem Granulatgemisch wurde die Fraktion von 100 bis 500 $\mu$m herausgesiebt.

50 g dieses Granulats wurden bei 300 bar zu runden Formkörpern mit einem Durchmesser von 6,0 cm verpreßt. Der entstandene Preßling hatte nach Druckentlastung eine Dicke von 1,065 cm, die sich im Verlauf von 15 Tagen nicht änderte. Das Granulat war nach dem Einrühren in Wasser (400 U/min., Dissolverscheibe) vollständig redispergierbar, so daß die ursprüngliche Partikelgrößenverteilung und die mittlere Partikelgröße von $d_{50}$ = 10 $\mu$m wieder erreicht wurde.

## Vergleichsbeispiel 1

Es wurde gearbeitet wie in Beispiel 1, jedoch wurde statt der Additivzubereitung das Cellulosederivat Optapix® C 12 G eingesetzt. Der erhaltene Preßling hatte eine Dicke von 1,110 cm, nach 8 Tagen von 1,125 cm und nach 15 Tagen von 1,130 cm, Das Granulat ließ sich nach dem Einrühren in Wasser (400 U/min., Dissolverscheibe) nicht vollständig redispergieren.

## Beispiel 2

Es wurde gearbeitet wie in Beispiel 1, jedoch enthielt die Additivzubereitung als Komponente (1) ein Polymer aus 18 % Acrylnitril, 44 % Butylacetat, 2 % Methacrylsäure und 36 % Methylmethacrylat. Das erhaltene Granulat war in Wasser gut redispergierbar. Der erhaltene Preßling hatte eine Dicke von 1,020 cm, die sich im Verlauf von 15 Tagen nicht änderte.

Vergleichsbeispiel 2

Es wurde gearbeitet wie in Beispiel 2, jedoch wurden nur die Komponenten (1) und (5) der Additivzubereitung eingesetzt. Der erhaltene Preßling hatte eine Dicke von 1,045 cm, nach 8 Tagen von 1,060 cm und nach 15 Tagen von 1,065 cm. Das Granulat ließ sich nicht vollständig redispergieren.

Beispiel 3

Es wurde gearbeitet wie in Beispiel 1, jedoch wurde anstelle der Komponente (1) der Additivzubereitung ein 40%-iger Latex aus Butadien und Styrol eingesetzt. Der erhaltene Preßling zeigte eine Dicke von 1,020 cm, die sich im Verlauf von 15 Tagen nicht änderte.

Beispiel 4

Es wurde gearbeitet wie in Beispiel 3, jedoch wurde als Komponente (2) der Additivzubereitung eine 40%-ige Polyurethandispersion aus einem modifizierten Hexamethylendiisocyanat (Desmodur® N, Bayer AG) und einem Polyetherdiol aus Propylenoxid und Ethylenoxid eingesetzt. Der erhaltene Preßling zeigte eine Dicke von 1,015 cm, die sich im Verlauf von 15 Tagen nicht änderte. Das Granulat war in Wasser gut redispergierbar.

Beispiel 5

Es wurde verfahren wie in Beispiel 1, jedoch wurde als Komponente (1) der Additivzubereitung eine 40%-ige wäßrige Dispersion einer Paraffinmischung eingesetzt. Der erhaltene Preßling besaß eine Dicke von 1,000 cm, die sich im Verlauf von 15 Tagen nicht änderte.

Beispiel 6

Es wurde verfahren wie in Beispiel 1, jedoch wurde anstelle der Komponenten (3) und (4) ein Addukt aus Abietinsäure und 30 Mol Ethylenoxid eingesetzt. Der erhaltene Preßling hatte eine Dicke von 1,005 cm, die sich innerhalb von 15 Tagen nicht änderte.

Beispiel 7

Es wurde verfahren wie in Beispiel 2, jedoch wurden 0,4 g der Komponente (1), 0,1 g der Komponente (2), 0,04 g der Komponente (3) und 0,06 g der Komponente (4) eingesetzt. Die Menge der Komponente (5) blieb unverändert. Der erhaltene Preßling hatte eine Dicke von 1,005 cm, nach 8 Tagen und nach 15 Tagen von 1,010 cm.

Beispiel 8

Es wurde verfahren wie in Beispiel 2, jedoch wurde anstelle der Komponenten (2) und (3) ein durch Addition eines Gemisches aus 5 Mol Propylenoxid und 60 Mol Ethylenoxid auf Stearylamin erhaltener, basische Gruppen aufweisender Polyether eingesetzt. Der erhaltene Preßling hatte eine Dicke von 0,995 cm, nach 8 und nach 15 Tagen von 1,000 cm.

Beispiel 9

Es wurde gearbeitet wie in Beispiel 8, jedoch wurde als basischer Polyether ein Blockcopolymer (MG 30 000) aus Propylenoxid und Ethylenoxid (20:80%), gestartet auf Ethylendiamin, eingesetzt. Der erhaltene Preßling hatte eine Dicke von 1,010 cm, die sich im Verlauf von 15 Tagen nicht änderte.

Beispiel 10

Es wurde gearbeitet wie in Beispiel 2, jedoch wurden 38 g Additivzubereitung eingesetzt. Der erhaltene Preßling hatte eine Dicke von 1,010 cm, die sich im Verlauf von 15 Tagen nicht änderte.

Beispiel 11

Es wurde gearbeitet wie in Beispiel 2, jedoch wurde 0,1 g Polymer (Komponente 1) und insgesamt 0,5 g der Komponenten 2, 3 und 4 eingesetzt. Das vollständig redispergierbare Granulat wurde zu einem Preßling mit einer Dicke von 1,005 cm verpreßt, die Dicke änderte sich im Verlauf von 15 Tagen nicht.

Beispiel 12

Es wurde gearbeitet wie in Beispiel 2, jedoch wurde anstelle der Porzellanmasse Aluminiumoxid (Alcoa® 1000 CT) eingesetzt. Der erhaltene Preßling hatte eine Dicke von 0,800 cm, nach 8 Tagen und nach 15 Tagen von 0,810 cm. Das erhaltene Granulat war im Wasser gut redispergierbar.

Beispiel 13

Es wurde verfahren wie in Beispiel 2, jedoch enthielt die Additivzubereitung 0,3 g Polymer, 0,15 g Polyurethan aus Toluylendiisocyanat, Polyethylenoxid und Stearylalkohol sowie 0,15 g Ethylenoxidpolyether. Der erhaltene Preßling hatte eine Dicke von 1,045 cm, nach 8 und nach 15 Tagen von 1,045 cm. Das Granulat ließ sich gut redispergieren.

Beispiel 14

Es wurde gearbeitet wie in Beispiel 11, jedoch wurde zuerst aus der pulverförmigen Porzellanmasse und 15 g Wasser ein additivfreies Granulat hergestellt und anschließend mit einer Additivlösung gecoatet. Nach Trocknung wie in Beispiel 1 wurde ein Preßling mit einer Dicke von 1,030 cm erhalten. Diese Dicke betrug nach 15 Tagen 1,035 cm.

Beispiel 15

Es wurde gearbeitet wie in Beispiel 7, jedoch wurde zuerst aus der Porzellanmasse mit 0,3 % Ammoniumpolyacrylat (Molekulargewicht: 3000) ein 65 %iger Schlicker hergestellt, der unter Zugabe von 0,4 g des in Beispiel 2 verwendeten Polymers in einem Wirbelschichtsprühgranulator granuliert wurde. Auf das erhaltene Granulat wurden dann die übrigen Additive aufgecoatet. Anschließend wurde das Granulat verpreßt. Der Preßling hatte eine Dicke von 1,005 cm, nach 8 Tagen und nach 15 Tagen von 1,010 cm.

Beispiele 16 bis 24

Es wurde gearbeitet wie in Beispiel 13, jedoch wurde das Granulat bei 105 °C bis zur Gewichtskonstanz getrocknet. Außer Porzellanmasse wurden die in Tabelle 1 aufgeführten Pulver eingesetzt. Wie aus Tabelle 1 ersichtlich, ließen sich alle erfindungsgemäßen Granulate besser redispergieren als die mit dem Cellulosederivat Optapix® C 12 G oder dem Polyvinylalkohol Moviol® 10-98 zum Vergleich hergestellten Granulate. Beim Verzicht auf die Komponente 1 wurde die Redispergierbarkeit noch besser.

Zur Prüfung der Redispergierbarkeit wurde das jeweilige Granulat 1 Stunde mit einer Dissolverscheibe (400 U/min) in Wasser gerührt und dann bestimmt, welcher Anteil in Gew.-% an Teilchen einer Größe über 65 µm noch vorhanden war, Weitere Details siehe Tabelle 1.

Dort bedeutet A, daß das jeweilige Granulat entsprechend Beispiel 11, B analog Beispiel 11, jedoch mit 0,6 g der Komponenten 2, 3 und 4, C mit 0,6 g des Cellulosederivats Optapix® C 12 G anstelle der erfindungsgemäßen Zusätze und D mit 0,6 g des Polyvinylalkohols Moviol® 10-98 anstelle der erfindungsgemäßen Zusätze, hergestellt worden ist.

**Tabelle 1**

| Beispiel Nr. | eingesetztes Pulver | Gew.-% Rückstand mit einer Korngröße über 65 µm: erfindungsgemäße Granulate A | B | Vergleichsgranulate C | D |
|---|---|---|---|---|---|
| 16 | Quarzmehl (Sicron® SF 600) | 18 | 9 | 40 | - |
| 17 | Calciumcarbonat (Milicarb®) | 9 | 2 | 18 | 37 |
| 18 | Kaolin (Polstar® 200 R) | 8 | 6 | 17 | - |
| 19 | Talkum A.T. 200 | 30 | - | - | 90 |
| 20 | Eisenoxid (Bayferrox® 120 NM) | 21 | 13 | 40 | - |
| 21 | Titandioxid (Bayertitan® PK 5585 | 28 | 23 | - | 42 |
| 22 | Carbonyleisen (BASF) | 21 | - | - | 35 |
| 23 | Aluminiumoxid (Alcoa® 1000 SG) | 6 | 3 | 12 | - |
| 24 | Porzellanmasse | 0 | 0 | 6 | 9 |

<u>Beispiele 25 bis 32</u>

Diese Beispiele wurden analog den Beispielen 16 bis 24 durchgeführt, qualitativ waren die verwendeten Additive bei E und I identisch mit A, bei F und J identisch mit B, bei G und K identisch mit C und bei H und

L identisch mit D. Die Granulate E bis H wurden jedoch unter Einsatz von insgesamt 6% Additiven, die Granulate I bis L unter Einsatz von insgesamt 12% Additiven hergestellt. Weitere Details siehe Tabelle 2.

Tabelle 2

| Bsp.-Nr. | eingesetztes Pulver wie in Beispiel | Gew.-% Rückstand mit einer Korngröße über 65 µm | | | | | | | |
|---|---|---|---|---|---|---|---|---|---|
| | | erfindungsgemäße Granulate (6%) | | Vergleichsgranulate (6%) | | erfindungsgemäße Granulate (12 %) | | Vergleichsgranulate (12%) | |
| | | E | F | G | H | I | J | K | L |
| 25 | 16 | 19 | 8 | 46 | - | 19 | 9 | 52 | - |
| 26 | 17 | 9 | 3 | 21 | 43 | 10 | 3 | 23 | 51 |
| 27 | 18 | 7 | 5 | 20 | - | 9 | 6 | 26 | - |
| 28 | 19 | 42 | - | - | 98 | 47 | - | - | 98 |
| 29 | 20 | 22 | 13 | 43 | - | 23 | 12 | 46 | - |
| 30 | 21 | 31 | 25 | - | 48 | 30 | 25 | - | 49 |
| 31 | 22 | 22 | - | - | 38 | 25 | - | - | 39 |
| 32 | 23 | 8 | 4 | 15 | - | 9 | 5 | 18 | - |

## Patentansprüche

1. Granulate aus pulvrigen Stoffen, dadurch gekennzeichnet, daß sie als Zusatzstoffe Polyurethane und/oder Polyharnstoffe, Polyether und gegebenenfalls weitere Polymere enthalten.

2. Granulate nach Anspruch 1, dadurch gekennzeichnet, daß sie

| | |
|---|---|
| 0,01 bis 30 Gew.-% | Polyurethane und/oder Polyharnstoffe, |
| 0,01 bis 30 Gew.-% | Polyether und |
| 0 bis 60 Gew.-% | weitere Polymere, insgesamt jedoch nicht mehr als 65 Gew.-% dieser Komponenten enthalten, |

sowie Hilfsstoffe in Mengen von 0 bis 35 Gew.-%, bezogen auf pulvrige Stoffe und maximal 10 Gew.-% Wasser und/oder Lösungsmittel, bezogen auf das fertige Granulat.

3. Granulate nach Ansprüchen 1 und 2, dadurch gekennzeichnet, daß Polyurethane und/oder Polyharnstoffe in Form von Lösungen oder Dispersionen mit einem Gehalt von 2 bis 60 Gew.-% und gegebenenfalls weitere Polymere in Form von Polymerdispersionen mit einem Gehalt von 5 bis 60 Gew.-% eingebracht worden sind.

4. Granulate nach Ansprüchen 1 bis 3, dadurch gekennzeichnet, daß das eingesetzte Polyurethan aus einem Diisocyanat und wenigstens einem Makropolyol erhalten worden ist.

5. Granulate nach Ansprüchen 1 bis 4, dadurch gekennzeichnet, daß das eingesetzte Polyurethan aus Diisocyanaten der Formel $Q(NCO)_2$, in welcher Q für einen aromatischen Kohlenwasserstoffrest mit 6 bis 15 Kohlenstoffatomen oder für einen aliphatischen, cycloaliphatischen oder gemischt aliphatisch/cycloaliphatischen Kohlenwasserstoffrest mit 2 bis 14 Kohlenstoffatomen steht und

   Makropolyolen, bei denen es sich um Polyester-, Polyether-, Polythioether-, Polylacton-, Polycarbonat-, Polyestercarbonat-, Polyethercarbonat-, Polyacetal- und/oder Polyesteramid-Diole handelt,

   erhalten wurde.

6. Granulate nach Ansprüchen 1 bis 5, dadurch gekennzeichnet, daß es sich bei den Polyethern um Additionsprodukte von Ethylenoxid und/oder Propylenoxid an Startermolekülen mit einem oder mehreren aktiven Wasserstoffatomen handelt.

7. Granulate nach Ansprüchen 1 bis 6, dadurch gekennzeichnet, daß es sich bei den gegebenenfalls einzusetzenden weiteren Polymeren um Polymere aus $\alpha,\beta$-olefinisch ungesättigte Monocarbonsäuren mit 3 bis 5 C-Atomen, deren Ester, Nitrile und Amide, $\alpha,\beta$-olefinisch ungesättigte Dicarbonsäuren mit 3 bis 5 C-Atomen und deren Derivate,
   Mono- und Diester des Vinylalkohols mit Carbonsäuren oder Vinylether, Vinylketone und Vinylamide, Vinylverbindungen von Aromaten oder Heterocyclen, N-Methylolether des Acrylsäure- und/oder Methacrylsäureamids,
   Mannichbasen des Acrylsäure- und/oder Methacrylsäureamids,
   Acryl- und/oder Methacrylsäurederivate mit einer endständigen Halogenmethylcarbonylgruppe, Allylverbindungen,
   monoolefinisch ungesättigte aliphatische Kohlenwasserstoffe mit 2 bis 6 C-Atomen, konjugierte Diolefine und/oder Norbornene und Hydroxymethylnorbornene

   handelt.

8. Verfahren zur Herstellung von Granulaten aus pulvrigen Stoffen, dadurch gekennzeichnet, daß man

| | |
|---|---|
| 0,01 bis 30 Gew.-% | Polyurethane und/oder Polyharnstoffe, |
| 0,01 bis 30 Gew.-% | Polyether, |
| 0 bis 60 Gew.-% | weitere Polymere, |

insgesamt jedoch nicht mehr als 65 Gew.-% dieser drei Komponenten (jeweils bezogen auf das Granulat), sowie

| | |
|---|---|
| 0 bis 35 Gew.-% | Hilfsstoffe (bezogen auf pulvrige Stoffe) |

mit dem zu granulierenden Pulver mischt, dieses Gemisch auf an sich bekannte Weise granuliert und

gegebenenfalls abschließend den Gehalt des Granulats an Wasser und/oder Lösungsmitteln auf weniger als 5 Gew.-% reduziert.

**9.** Verfahren nach Anspruch 8, dadurch gekennzeichnet, daß man für die Herstellung von Granulaten mit besonders guter Festigkeit

| | |
|---|---|
| 0,02 bis 10 Gew.-% | Polyurethane und/oder Polyharnstoffe, |
| 0,02 bis 10 Gew.-% | Polyether und |
| 0,02 bis 10 Gew.-% | weitere Polymere, |

insgesamt jedoch nicht mehr als 25 Gew.-% dieser drei Komponenten (jeweils bezogen auf das Granulat) und
für die Herstellung besonders gut redispergierbarer Granulate

| | |
|---|---|
| 0,02 bis 15 Gew.-% | Polyurethane und/oder Polyharnstoffe und |
| 0,02 bis 15 Gew.-% | Polyether (jeweils bezogen auf das Granulat) |

einsetzt.

**10.** Verwendung von Granulaten des Anspruchs 1 oder hergestellt nach Anspruch 8 für die Herstellung von Geschirr- und/oder anderer traditioneller Keramik, von Ingenieurkeramik, von pulvermetallurgischen Erzeugnissen, von Pigment- und/oder Füllstoffkonzentraten, von Wirkstoff-Formulierungen und/oder die Bereitstellung von Hilfsstoffen.